# EUROPÄISCHE PATENTSCHRIFT

(11) **EP 1 341 118 B1**
(45) Veröffentlichungstag und Bekanntmachung des Hinweises auf die Patenterteilung: **06.09.2006**
(21) Anmeldenummer: 03003883.0
(22) Anmeldetag: 21.02.2003
(51) Int. Cl.: G06K 7/10

(54) **Optoelektronische Vorrichtung**
Optoelectronic device
Appareil opto-électronique

(30) Priorität: 01.03.2002 DE 10209269
(43) Veröffentlichungstag der Anmeldung: 03.09.2003
(73) Patentinhaber: Leuze electronic GmbH + Co. KG, 73277 Owen/Teck (DE)
(72) Erfinder: Claus, Armin, 72622 Nürtingen (DE)
(74) Vertreter: Ruckh, Rainer Gerhard

(56) Entgegenhaltungen:
- DE-C- 19 845 946
- US-A- 4 916 318

## Beschreibung

Die Erfindung betrifft eine optoelektronische Vorrichtung gemäß dem Oberbegriff des Anspruchs 1.

Eine derartige optoelektronische Vorrichtung ist aus der DE 198 44 238 A1 bekannt. Diese optoelektronische Vorrichtung dient zur Erfassung von Marken, die insbesondere als Barcodes ausgebildet sind. Die optoelektronische Vorrichtung weist einen Sender mit einer nachgeordneten Sendeoptik und einen Empfänger mit einer vorgeordneten Empfangsoptik auf. Die vom Sender emittierten Sendelichtstrahlen und die von den Marken reflektierten Empfangslichtstrahlen werden über eine Ablenkeinheit geführt. Die Ablenkeinheit besteht aus einem rotierenden Polygonspiegelrad mit einer vorgegebenen Anzahl von Spiegelflächen. Mittels der Ablenkeinheit werden die Sendelichtstrahlen periodisch innerhalb eines Überwachungsbereichs geführt.

Um die Sendelichtstrahlen und Empfangslichtstrahlen jeweils über dieselbe Spiegelfläche des Polygonspiegelrads zu führen, sind zwischen dem Sender und der Ablenkeinheit einerseits und zwischen dem Empfänger und der Ablenkeinheit andererseits diverse Umlenkspiegel angeordnet, über welche die Sendelichtstrahlen und Empfangslichtstrahlen geführt werden.

Die optoelektronische Vorrichtung weist somit eine Vielzahl von optischen Komponenten auf, über welche die Sendelichtstrahlen und Empfangslichtstrahlen geführt werden müssen.

Die einzelnen Komponenten, insbesondere die Umlenkspiegel, müssen in geeigneter Weise justiert werden. Dadurch entsteht ein unerwünscht hoher Montageaufwand bei der Fertigung der optoelektronischen Vorrichtung. Zudem weist die optoelektronische Vorrichtung eine unerwünscht große Bauform auf, da insbesondere die Anordnung der Umlenkspiegel und der Empfangsoptik vor dem Empfänger einen großen Platzbedarf beansprucht.

Dabei ist insbesondere nachteilig, dass durch die vorgegebene Brennweite der Empfangsoptik ein großer Abstand zwischen dieser und der Ablenkeinheit vorgesehen werden muss.

Ein weiterer wesentlicher Nachteil derartiger optoelektronischer Vorrichtungen besteht darin, dass durch die großflächige Empfangsoptik unvermeidlich auch ein unerwünscht hoher Anteil von Stör- und Fremdlichteinstrahlungen auf den Empfänger auftrifft, wodurch die Nachweissicherheit der optoelektronischen Vorrichtung beeinträchtigt wird.

Aus der WO 00/16 239 ist eine weitere gattungsgemäße optoelektronische Vorrichtung zur Erfassung von Barcodes bekannt. Bei dieser optoelektronischen Vorrichtung sind der Sender und der Empfänger übereinander liegend in Abstand zueinander angeordnet. Die vom Sender emittierten Sendelichtstrahlen und die von den Marken zurückreflektierten Empfangslichtstrahlen werden über eine Ablenkeinheit geführt. Die Ablenkeinheit ist von einem Polygonspiegelrad gebildet, welches eine vorgegebene Anzahl von Spiegelflächen aufweist. Die Sendelichtstrahlen und Empfangslichtstrahlen werden jeweils über dieselbe Spiegelfläche des Polygonspiegelrades geführt. Dabei sind die Sendelichtstrahlen und Empfangslichtstrahlen räumlich getrennt voneinander geführt, so dass die Sendelichtstrahlen auf das obere Teilsegment der jeweiligen Spiegelfläche des Polygonspiegelrads treffen, während die Empfangslichtstrahlen über das untere Teilsegment derselben Spiegelfläche geführt sind.

Um eine räumliche Trennung der Sendelichtstrahlen und Empfangslichtstrahlen zu erhalten, müssen die Teilsegmente der Spiegelfläche, auf welche die Sendelichtstrahlen und Empfangslichtstrahlen treffen, deutlich voneinander abgesetzt werden.

Hierzu muss die Höhe des Polygonspiegelrads gegenüber herkömmlichen Polygonspiegelrädern deutlich vergrößert werden, um die gewünschte Separation der Sende- und Empfangslichtstrahlen zu erhalten. Dies wiederum bedingt eine unerwünschte Vergrößerung der Bauform der optoelektronischen Vorrichtung.

Der Erfindung liegt die Aufgabe zugrunde eine optoelektronische Vorrichtung der eingangs genannten Art so auszubilden, dass diese bei einer möglichst geringen Bauform eine möglichst hohe Nachweissicherheit aufweist.

Zur Lösung dieser Aufgabe sind die Merkmale des Anspruchs 1 vorgesehen. Vorteilhafte Ausführungsformen und zweckmäßigeWeiterbildungen der Erfindung sind in den Unteransprüchen beschrieben.

Die erfindungsgemäße optoelektronische Vorrichtung dient zur Erfassung von mit Kontrastmustern versehenen Marken und weist einen Sendelichtstrahlen emittierenden Sender, einen Empfangslichtstrahlen empfangenden Empfänger, eine Ablenkeinheit, mittels derer die Sendelichtstrahlen periodisch innerhalb eines Überwachungsbereichs geführt sind, und eine Auswerteeinheit zur Auswertung der am Ausgang des Empfängers anstehenden Empfangssignale auf. Der Empfänger ist in einem lichtundurchlässigen Einsatz gelagert, welcher in Richtung der optischen Achse des Empfängers verlaufende Kanalstrukturen aufweist, in welchen die von der Ablenkeinheit reflektierten Empfangslichtstrahlen zum Empfänger geführt sind.

Ein wesentlicher Vorteil der Erfindung besteht darin, dass der im Einsatz gelagerte Empfänger ohne Zwischenschaltung einer Empfangsoptik und Umlenkspiegeln der Ablenkeinheit gegenüberliegt. Der Abstand zwischen Empfänger und Ablenkeinheit kann somit sehr gering gehalten werden, wodurch die Baugröße der optoelektronischen Vorrichtung entsprechend reduziert ist. Zudem ist dadurch die Anzahl der optischen Komponenten der optoelektronischen Vorrichtung erheblich reduziert, wodurch diese einfach und kostengünstig herstellbar ist.

Ein weiterer wesentlicher Vorteil der erfindungsgemäßen optoelektronischen Vorrichtung besteht darin, dass durch die Führung der Empfangslichtstrahlen in den Kanalstrukturen des Einsatzes die Stör- und Fremdlichteinstrahlung auf den Empfänger wesentlich reduziert ist, wodurch eine hohe Nachweissicherheit der optoelektronischen Vorrichtung erhalten wird.

Dies beruht darauf, dass die Geometrie des Einsatzes an die Strahlführung der Empfangslichtstrahlen dadurch optimal angepasst ist, dass die Kanäle der Kanalstrukturen parallel zur optischen Achse des Empfängers verlaufen. Die entlang der optischen Achse verlaufenden Empfangslichtstrahlen treffen somit nahezu ungehindert auf den Empfänger. Dagegen treffen schräg einfallende Stör- und Fremdlichteinstrahlungen auf die lichtundurchlässigen Wandelemente der Kanalstrukturen, so dass diese nicht mehr auf den Empfänger treffen.

Um die Ausblendung der Stör- und Fremdlichteinstrahlung zu optimieren, sind die Kanalstrukturen möglichst lang ausgebildet und reichen bis dicht vor die Ablenkeinheit. Zudem weisen die Kanalstrukturen eine Wabenstruktur mit mehreren Kanälen auf, deren Durchmesser erheblich kleiner sind als deren Längen. Somit ist gewährleistet, dass auch in geringen Winkeln zur optischen Achse des Empfängers einfallende Stör- und Fremdlichtstrahlen auf die Wandelemente der Kanalstrukturen und nicht auf den Empfänger auftreffen.

In einer vorteilhaften Ausführungsform sind die Wandelemente der Kanalstrukturen aufgerauht oder strukturiert und wirken so als Lichtfallen für die Stör- und Fremdlichtstrahlen, das heißt es wird verhindert, dass diese durch Mehrfachreflexionen an den Wandelementen noch zum Empfänger gelangen.

In einer bevorzugten Weiterbildung der Erfindung kann der Einsatz aus leitfähigem Material bestehen, so dass mit diesem zudem ein EMV- (Elektromagnetische Verträglichkeit) Schutz des Empfängers erhalten wird.

In einer besonders vorteilhaften Ausführungsform der Erfindung verlaufen die Sendelichtstrahlen und Empfangslichtstrahlen koaxial. Hierzu ist der Sender ebenfalls im Einsatz angeordnet und liegt unmittelbar hinter dem Empfänger. Die Sendelichtstrahlen sind durch eine Ausnehmung in der lichtempfindlichen Fläche des Empfängers geführt, wodurch die Sendelichtstrahlen von der lichtempfindlichen Fläche zumindest teilweise umschlossen sind.

Die Sendelichtstrahlen und Empfangslichtstrahlen sind in diesem Fall in separaten Kanälen der Kanalstruktur des Einsatzes geführt, wodurch eine nahezu vollständige Trennung der Sendelichtstrahlen und Empfangslichtstrahlen erhalten wird.

Zudem weist diese Ausführungsform einen besonders kompakten Aufbau auf.

Die Erfindung wird im nachstehenden anhand der Zeichnungen erläutert. Es zeigen:
- Figur 1:: Schematische Darstellung eines Ausführungsbeispiels der erfindungsgemäßen optoelektronischen Vorrichtung.
- Figur 2, 3:: Unterschiedliche Ausführungsformen des Empfängers für die optoelektronische Vorrichtung gemäß Figur 1.
- Figuren 4 - 6:: Unterschiedliche Ausführungsformen der Einsätze für die optoelektronische Vorrichtung gemäß Figur 1.

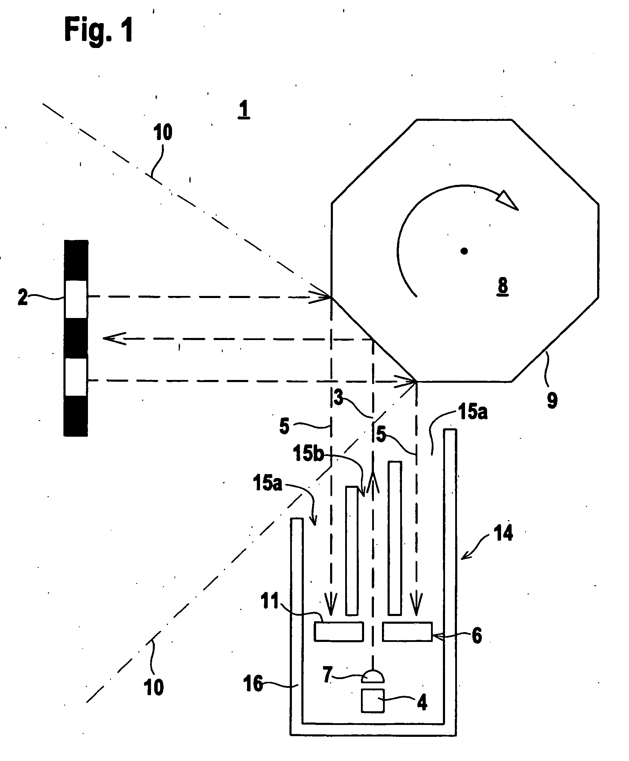

In Figur 1 ist schematisch der Aufbau einer optoelektronischen Vorrichtung 1 zum Erkennen von mit definierten Kontrastmustern versehenen Marken dargestellt. Prinzipiell können die Marken beliebige Folgen und Formen von aneinander angrenzenden Hell-Dunkelflächen, vorzugsweise Schwarz-Weiß-Flächen, aufweisen. Im Folgenden soll die Erfindung für den Fall erläutert werden, dass die Marken von Barcodes 2 gebildet sind. Die Barcodes 2 bestehen im Wesentlichen aus einer Folge von schwarzen und weißen Strichelementen definierter Länge und Breite.

Die optoelektronische Vorrichtung 1 weist einen Sendelichtstrahlen 3 emittierenden Sender 4 und einen Empfangslichtstrahlen 5 empfangenden Empfänger 6 auf. Dem Sender 4, der vorzugsweise von einer Laserdiode gebildet ist, ist eine Sendeoptik 7 zur Fokussierung der Sendelichtstrahlen 3 nachgeordnet.

Die vom Sender 4 emittierten Sendelichtstrahlen 3 und die von dem Barcode 2 zurückreflektierten Empfangslichtstrahlen 5 sind über eine Ablenkeinheit geführt. Die Ablenkeinheit besteht aus einem motorisch getriebenen Polygonspiegelrad 8 mit einer vorgegebenen Anzahl von facettenförmigen Spiegelflächen 9.

Durch die Drehbewegung des Polygonspiegelrades 8 werden die Sendelichtstrahlen 3 periodisch in einem Überwachungsbereich 10 geführt, der in einer Abtastebene verläuft. Der Überwachungsbereich 10 erstreckt sich über einen bestimmten Winkelbereich, der durch die Anzahl der Spiegelflächen 9 des Polygonspiegelrades 8 vorgegeben ist.

Die am Ausgang des Empfängers 6 anstehenden Empfangssignale werden in einem nicht dargestellten Verstärker verstärkt und in einer ebenfalls nicht dargestellten Auswerteeinheit ausgewertet.

Die Empfangslichtstrahlen 5, die an den Barcodes 2 reflektiert werden, weisen entsprechend der Folge von schwarzen und weißen Strichelementen des Barcodes 2 eine Amplitudenmodulation auf. Die am Ausgang des Empfängers 6 anstehenden Empfangssignale weisen eine entsprechende Amplitudenmodulation auf. Die analogen, amplitudenmodulierten Empfangssignale werden in der Auswerteeinheit mittels einer Schwellwerteinheit bewertet. Dadurch entstehen binäre Signalfolgen, anhand derer durch Vergleich mit abgespeicherten Kontrastmustern von Barcodes 2 die Erkennung des Barcodes 2 erfolgt.

Die vom Sender 4 emittierten Sendelichtstrahlen 3, die auf die Ablenkeinheit geführt sind und die von den Marken über die Ablenkeinheit zum Empfänger 6 zurückreflektierten Empfangslichtstrahlen 5 verlaufen bei der Ausführungsform gemäß Figur 1 koaxial.

Diese koaxiale Strahlführung wird dadurch erreicht, dass die lichtempfindliche Fläche 11 des Empfängers 6, der unmittelbar dem Sender 4 und der Sendeoptik 7 nachgeordnet ist, die Sendelichtstrahlen 3 zumindest teilweise umschließt.

Diese Strahlführung wird dadurch erreicht, dass der Empfänger 6 und dessen lichtempfindliche Fläche 11 eine Ausnehmung 12 aufweisen, durch welche die Sendelichtstrahlen 3 geführt sind.

Der Sender 4 und der Empfänger 6 liegen derart in Abstand zu dem Polygonspiegelrad 8, dass die Sendelichtstrahlen 3 und Empfangslichtstrahlen 5 über dieselbe Spiegelfläche 9 des Polygonspiegelrads 8 geführt sind. Die Spiegelflächen 9 des Polygonspiegelrades 8 sind im vorliegenden Fall senkrecht zu den Strahlachsen der Sendelichtstrahlen 3 und Empfangslichtstrahlen 5 orientiert. Der auf eine Spiegelfläche 9 abgebildete Empfangslichtfleck umschließt zumindest teilweise den auf dieselbe Spiegelfläche 9 abgebildeten Sendelichtfleck der Sendelichtstrahlen 3. Die Spiegelflächen 9 sind an die Geometrien der Sendelichtstrahlen 3 und Empfangslichtstrahlen 5 derart angepasst, dass diese die Spiegelfläche 9 möglichst vollständig ausleuchten.

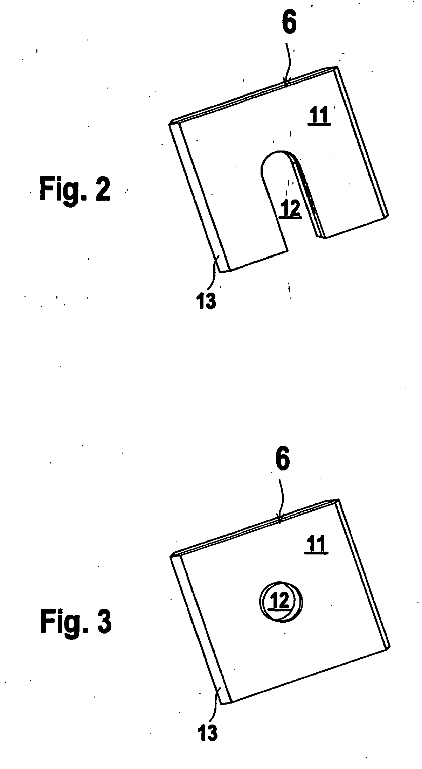

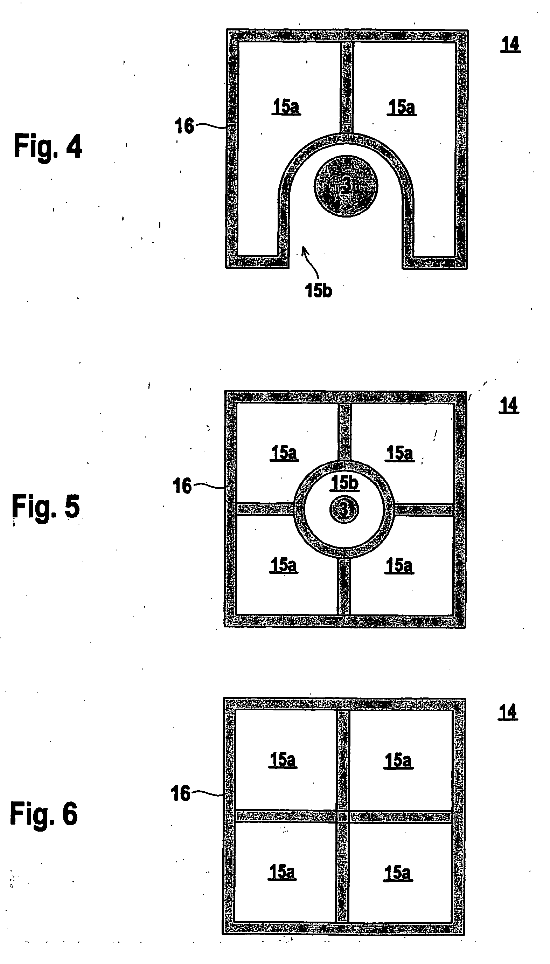

Die Figuren 2 und 3 zeigen zwei Ausführungsbeispiele des Empfängers 6 der optoelektronischen Vorrichtung 1 gemäß Figur 1. Der Empfänger 6 weist eine großflächige, ebene lichtempfindliche Fläche 11 auf, die eine im Wesentlichen quadratische Außenkontur aufweist. Die lichtempfindliche Fläche 11 ist bei den Ausführungsbeispielen gemäß den Figuren 2 und 3 homogen, das heißt einstückig ausgebildet. Alternativ kann der Empfänger 6 aus einer Anzahl von Empfangselementen bestehen, welche jeweils lichtempfindliche Teilflächen aufweisen, welche zusammen die lichtempfindliche Fläche 11 bilden.

Der Empfänger 6 ist auf einem Träger 13 montiert, welche über nicht dargestellte Anschlüsse an eine Platine anschließbar ist, auf welcher die Auswerteeinheit integriert ist. Die Querschnittsfläche des Trägers 13 ist an die Größe der lichtempfindlichen Fläche 11 angepasst.

Bei dem Ausführungsbeispiel gemäß Figur 2 verläuft die Ausnehmung 12 vom Zentrum des Empfängers 6 bis zu dessen unteren Rand und mündet dort aus.

Bei dem Ausführungsbeispiel gemäß Figur 3 ist die Ausnehmung 12 von einer kreisförmigen, zentralen Bohrung gebildet, welche die lichtempfindliche Fläche 11 und den dahinter liegenden Träger 13 durchsetzt.

Bei beiden Ausführungsbeispielen sind die Durchmesser der Ausnehmungen größer als die Durchmesser der Sendelichtstrahlen 3, so dass diese ungehindert die Ausnehmung durchsetzen.

Der Sender 4, die Sendeoptik 7 sowie der Empfänger 6 mit dem Träger 13 bilden eine Baueinheit, welche in einem lichtundurchlässigen Einsatz 14 integriert sind. Der Einsatz 14 besteht vorzugsweise aus einem Zink-Druckguss-Teil und damit aus leitfähigem Material, so dass dieser einen EMV-Schutz für die in dessen Innenraum gelagerten elektrischen beziehungsweise optoelektronischen Komponenten bildet. Alternativ kann der Einsatz von einem Kunststoff-Spritzteil gebildet sein.

Diese Komponenten sind im Bereich des Bodens des Einsatzes 14 angeordnet. Die Querschnittsfläche des Einsatzes 14 ist dabei an die Größe der Fläche des Empfängers 6 angepasst. Der Einsatz 14 weist Kanalstrukturen auf, in welchen die Empfangslichtstrahlen 5 beziehungsweise die Sendelichtstrahlen 3 geführt sind. Die Kanalstrukturen bestehen aus einer vorgegebenen Anzahl von Kanälen 15a, b, die durch lichtundurchlässige Wandelemente 16 des Einsatzes 14 begrenzt sind.

Die Kanalstrukturen bilden eine Wabenstruktur, wobei die Kanäle 15a, b jeweils einen konstanten Querschnitt aufweisen. Die Längsachsen der Kanäle 15a, b verlaufen parallel zu den optischen Achsen des Senders 4 und des Empfängers 6. Dabei enden die die Kanäle 15a, b begrenzenden Wandelemente 16 des Einsatzes 14 dicht vor der lichtempfindlichen Fläche 11 des Empfängers 6, die senkrecht zu den Längsachsen der Kanäle 15a, b orientiert sind.

Die Längen der Kanäle 15a, b sind so dimensioniert, dass die Kanalstrukturen möglichst dicht bis zur Ablenkeinheit geführt sind, ohne dass hierbei die Abtastung des Überwachungsbereichs 10 behindert wird. Daher sind wie in Figur 1 dargestellt die Kanäle 15a, b im Bereich des vorderen Randes des Polygonspiegelrades 8 kürzer als die Kanäle 15a, b im Bereich des Zentrums des Polygonspiegelrades 8. Damit ist gewährleistet, dass bei maximaler Ausdehnung der Kanalstrukturen in Richtung der Ablenkeinheit die Wandelemente 16 des Einsatzes 14 außerhalb des Bereichs des Überwachungsbereichs 10 liegen, welcher von den Empfangslichtstrahlen 5 und Sendelichtstrahlen 3 überstrichen wird.

Durch den Einsatz 14 wird die Nachweisempfindlichkeit der optoelektronischen Vorrichtung 1 erheblich erhöht. Dies beruht darauf, dass durch die Kanaistrukturen die Empfangslichtstrahlen 5 nahezu vollständig von der Ablenkeinheit zum Empfänger 6 geführt sind, jedoch Stör- und Fremdlichteinstrahlungen durch den Einsatz 14 blockiert werden, so dass diese nicht zum Empfänger 6 gelangen.

Dabei wird der Umstand ausgenutzt, dass die Strahlachsen der von der Ablenkeinheit reflektierten Empfangslichtstrahlen 5 senkrecht zur Ebene der lichtempfindlichen Fläche 11 verlaufen, während die Stör- und Fremdlichteinstrahlung aus einem großen Winkelbereich in Richtung des Empfängers 6 erfolgt. Durch die parallel zur Strahlachse der Empfangslichtstrahlen 5 verlaufenden Kanäle 15a, b werden die Empfangslichtstrahlen 5 ohne nennenswerte Reflexionen an den Wandelementen 16 der Kanalstrukturen zum Empfänger 6 geführt. Da der Querschnitt des Einsatzes 14 an die Größe der lichtempfindlichen Fläche 11 angepasst ist, werden die Empfangslichtstrahlen 5 nahezu vollständig auf die lichtempfindliche Fläche 11 des Empfängers 6 geführt.

Die überwiegend in schrägen Winkeln auf die Kanalstrukturen auftreffenden Stör- und Fremdlichtstrahlen treffen dagegen auf die Wandelemente 16 der Kanalstrukturen und nicht auf den Empfänger 6. Da die Längen der Kanäle 15a, b möglichst groß gewählt sind, würden die Stör- und Fremdlichtstrahlen erst nach mehrfachen Reflexionen an den Wandelementen 16 auf den Empfänger 6 auftreffen. Die Oberflächen der Wandelemente 16 sind jedoch stark lichtabsorbierend. Zudem sind die Oberflächen vorzugsweise aufgerauht oder strukturiert. Damit wirken die Wandelemente 16 als Lichtfallen, so dass Mehrfachreflexionen von Stör- und Fremdlichtstrahlen effizient unterbunden werden.

Die wabenförmige Kanalstrukturen weisen eine vorgegebenen Anzahl von langgestreckten Kanälen 15a, b mit in Verhältnis zu deren Längen kleinen Querschnittsflächen auf. Damit ist gewährleistet, dass nur solche Stör- und Fremdlichtstrahlen zum Empfänger 6 gelangen, die entlang der optische Achse des Empfängers 6 oder in einem eng begrenzten Winkel hierzu verlaufen.

Beispiele für derartige Kanalstrukturen sind in den Figuren 4 - 6 dargestellt. Dabei ist in den Figuren 4 - 6 jeweils eine Draufsicht auf die Oberseite des Einsatzes 14 dargestellt.

Die Wabenstruktur des Einsatzes 14 gemäß Figur 4 entspricht dem bei der optoelektronischen Vorrichtung 1 gemäß Figur 1 verwendeten Einsatz 14, in welchem der Sender 4 und der Empfänger 6 hintereinander liegend angeordnet sind. Dabei ist in dem Einsatz 14 gemäß Figur 4 ein Empfänger 6 gelagert, dessen lichtempfindliche Fläche 11 die in Figur 2 dargestellte Form aufweist.

Die Kanalstruktur des Einsatzes 14 gemäß Figur 4 weist zwei identisch ausgebildete, spiegelsymmetrisch angeordnete Kanäle 15a auf, in welchen die Empfangslichtstrahlen 5 geführt sind. Die lichtempfindliche Fläche 11 des Empfängers 6 im Bodenbereich des Einsatzes 14 ist an die Geometrien der Kanäle 15a angepasst, so dass sich diese über die gesamten Querschnittsflächen der Kanäle 15a erstreckt.

Weiterhin weist die Kanalstruktur des Einsatzes 14 einen Kanal 15b auf, der an einer Seitenwand des Einsatzes 14 ausmündet. In diesem Kanal 15b sind die vom Sender 4 emittierten Sendelichtstrahlen 3 geführt. Durch das Wandelement 16 zwischen diesem Kanal 15b und den beiden angrenzenden Kanälen 15a wird eine optische Trennung der Sendelichtstrahlen 3 und der Empfangslichtstrahlen 5 erreicht. Wie aus Figur 4 ersichtlich ist der Strahlquerschnitt der Sendelichtstrahlen 3 kleiner als der Querschnitt des Kanals 15a, so dass in diesem die Sendelichtstrahlen 3 ohne Reflexionen am angrenzenden Wandelement 16 geführt sind.

Figur 5 zeigt eine weitere Ausführungsform eines Einsatzes 14, der für die optoelektronische Vorrichtung 1 gemäß Figur 1 einsetzbar ist. Der Sender 4 und der Empfänger 6 sind wiederum hintereinander im Bodenbereich des Empfängers 6 angeordnet. Im vorliegenden Fall weist der Empfänger 6 die in Figur 3 dargestellte Form auf, das heißt die Sendelichtstrahlen 3 sind durch eine zentrale Bohrung in der lichtempfindlichen Fläche 11 geführt. Die Geometrie der Kanalstrukturen des Einsatzes 14 gemäß Figur 5 ist an diese Sender-Empfängerstruktur angepasst.

Der Einsatz 14 weist vier identisch ausgebildete erste Kanäle 15a auf, in welchen die Empfangslichtstrahlen 5 verlaufen und zur lichtempfindlichen Fläche 11 des Empfängers 6 geführt sind. Weiterhin ist ein zweiter Kanal 15b mit einem kreisförmigen Querschnitt vorgesehen, in welchen die Sendelichtstrahlen 3 verlaufen. Die Querschnittsfläche dieses Kanals 15b ist analog zu dem Ausführungsbeispiel gemäß Figur 4 größer als der Strahlquerschnitt der Sendelichtstrahlen 3.

Figur 6 zeigt eine Ausführungsform eines Einsatzes 14, in welchem ein Empfänger 6 einbringbar ist, dessen lichtempfindliche Fläche 11 sich über die gesamte Querschnittsfläche des Innenraumes des Einsatzes 14 erstreckt.

Dieser Einsatz 14 ist für eine optoelektronische Vorrichtung 1 geeignet, bei welcher nur der Empfänger 6 im Einsatz 14 angeordnet ist, wogegen der Sender 4 außerhalb des Einsatzes 14 liegt.

In diesem Fall weist der Einsatz 14 nur Kanäle 15a auf, in welchen die Empfangslichtstrahlen 5 geführt sind. Wie aus Figur 6 ersichtlich, sind die Kanäle 15a identisch ausgebildet. Prinzipiell können auch Kanäle 15a mit unterschiedlichen Querschnittsgeometrien vorgesehen sein.
Leuze electronic GmbH + Co.
73277 Owen/Teck, DE

### Bezugszeichenliste

- (1): Optoelektronische Vorrichtung
- (2): Barcodes
- (3): Sendelichtstrahlen
- (4): Sender
- (5): Empfangslichtstrahlen
- (6): Empfänger
- (7): Sendeoptik
- (8): Polygonspiegelrad
- (9): Spiegelfläche
- (10): Überwachungsbereich
- (11): Lichtempfindliche Fläche
- (12): Ausnehmung
- (13): Träger
- (14): Einsatz
- (15a): Kanal
- (15b): Kanal
- (16): Wandelement

## Patentansprüche

1. Optoelektronische Vorrichtung zur Erfassung von mit Kontrastmustern versehenen Marken mit einem Sendelichtstrahlen emittierenden Sender, einem Empfangslichtstrahlen empfangenden Empfänger, einer Ablenkeinheit, mittels derer die Sendelichtstrahlen periodisch innerhalb eines Überwachungsbereichs geführt sind, und einer Auswerteeinheit zur Auswertung der am Ausgang des Empfängers anstehenden Empfangssignale, **dadurch gekennzeichnet, dass** der Empfänger (6) in einem lichtundurchlässigen Einsatz (14) gelagert ist, welcher in Richtung der optischen Achse des Empfängers (6) verlaufende Kanalstrukturen aufweist, in welchen die von der Ablenkeinheit reflektierten Empfangslichtstrahlen (5) zum Empfänger (6) geführt sind.

2. Optoelektronische Vorrichtung nach Anspruch 1, **dadurch gekennzeichnet, dass** der Empfänger (6) im Bodenbereich des Einsatzes (14) angeordnet ist, und dass die Kanalstrukturen Kanäle (15a, b) aufweisen, welche von senkrecht von dem Boden des Einsatzes (14) hervorstehenden Wandelementen (16) begrenzt sind.

3. Optoelektronische Vorrichtung nach Anspruch 2, **dadurch gekennzeichnet, dass** die Kanalstrukturen eine Wabenstruktur bilden, deren Kanäle (15a, b) senkrecht zur optischen Achse des Empfängers (6) verlaufen.

4. Optoelektronische Vorrichtung nach einem der Ansprüche 2 oder 3, **dadurch gekennzeichnet, dass** die Querschnittsfläche des Einsatzes (14) an die Größe der lichtempfindlichen Fläche (11) des Empfängers (6) angepasst ist.

5. Optoelektronische Vorrichtung nach Anspruch 4, **dadurch gekennzeichnet, dass** der Empfänger (6) eine homogene, zusammenhängende lichtempfindliche Fläche (11) aufweist.

6. Optoelektronische Vorrichtung nach Anspruch 4, **dadurch gekennzeichnet, dass** der Empfänger (6) aus einer vorgegebenen Anzahl von Empfangselementen besteht, deren lichtempfindliche Teilflächen Bestandteile der lichtempfindlichen Fläche (11) sind.

7. Optoelektronische Vorrichtung nach einem der Ansprüche 2 - 6, **dadurch gekennzeichnet, dass** die Wandelemente (16) der Kanalstruktur aufgerauhte oder strukturierte Oberflächen aufweisen.

8. Optoelektronische Vorrichtung nach einem der Ansprüche 1 - 7, **dadurch gekennzeichnet, dass** der Einsatz (14) aus einem Metall-Druckguss-Teil oder aus einem Kunststoff-Spritzteil besteht.

9. Optoelektronische Vorrichtung nach einem der Ansprüche 1 - 8, **dadurch gekennzeichnet, dass** der Einsatz (14) aus elektrisch leitendem Material besteht.

10. Optoelektronische Vorrichtung nach einem der Ansprüche 1 - 9, **dadurch gekennzeichnet, dass** der Sender (4) und der Empfänger (6) im Einsatz (14) angeordnet sind.

11. Optoelektronische Vorrichtung nach Anspruch 10, **dadurch gekennzeichnet, dass** die Sendelichtstrahlen (3) und Empfangslichtstrahlen (5) koaxial verlaufend über die Ablenkeinheit geführt sind.

12. Optoelektronische Vorrichtung nach Anspruch 11, **dadurch gekennzeichnet, dass** die lichtempfindliche Fläche (11) des Empfängers (6) die Sendelichtstrahlen (3) zumindest teilweise umschließt.

13. Optoelektronische Vorrichtung nach einem der Ansprüche 11 oder 12, **dadurch gekennzeichnet, dass** die lichtempfindliche Fläche (11) des Empfängers (6) eine Ausnehmung aufweist, und dass der Sender (4) hinter dem Empfänger (6) angeordnet ist, so dass die Sendelichtstrahlen (3) durch die Ausnehmung geführt sind.

14. Optoelektronische Vorrichtung nach Anspruch 13, **dadurch gekennzeichnet, dass** die Ausnehmung als zentrale Bohrung in der lichtempfindlichen Fläche (11) des Empfängers (6) ausgebildet ist.

15. Optoelektronische Vorrichtung nach Anspruch 14, **dadurch gekennzeichnet, dass** die Ausnehmung an einem Rand des Empfängers (6) ausmündet.

16. Optoelektronische Vorrichtung nach einem der Ansprüche 10 - 15, **dadurch gekennzeichnet, dass** die Sendelichtstrahlen (3) und Empfangslichtstrahlen (5) in separaten Kanälen (15a, b) der Kanalstrukturen des Einsatzes (14) geführt sind.

17. Optoelektronische Vorrichtung nach einem der Ansprüche 1 - 16, **dadurch gekennzeichnet, dass** die Ablenkeinheit von einem Polygonspiegelrad (8) mit einer vorgegebenen Anzahl von Spiegelflächen (9) gebildet ist, wobei der auf eine Spiegelfläche (9) abgebildete Empfangslichtfleck der Empfangslichtstrahlen (5) den auf dieselbe Spiegelfläche (9) abgebildeten Sendelichtfleck zumindest teilweise umschließt.

## Claims

1. Optoelectronic device for detection of marks provided with contrast patterns, comprising a transmitter emitting transmitted light beams, a receiver receiving received light beams, a deflecting unit by means of which the transmitted light beams are periodically guided within a monitoring region, and an evaluating unit for evaluation of the received signals present at the output of the receiver, **characterised in that** the receiver (6) is mounted in a light-impervious insert (14) having channel structures which extend in the direction of the optical axis of the receiver (6) and in which the received light beams (5) reflected by the deflecting unit are guided to the receiver (6).

2. Optoelectronic device according to claim 1, **characterised in that** the receiver (6) is arranged in the base region of the insert (14) and that the channel structures have channels (15a, b) which are bounded by wall elements (16) protruding perpendicularly from the base of the insert (14).

3. Optoelectronic device according to claim 2, **characterised in that** the channel structures have a honeycomb structure, the channels (15a, 15b) of which extend perpendicularly to the optical axis of the receiver (6).

4. Optoelectronic device according to one of claims 2 and 3, **characterised in that** the cross-sectional area of the insert (14) is adapted to the size of the light-sensitive surface (11) of the receiver (6).

5. Optoelectronic device according to claim 4, **characterised in that** the receiver (6) has a homogeneous, cohesive light-sensitive surface (11).

6. Optoelectronic device according to claim 4, **characterised in that** the receiver (6) consists of a predetermined-number of receiving elements, the light-sensitive part surfaces of which are components of the light-sensitive surface (11).

7. Optoelectronic device according to one of claims 2 to 6, **characterised in that** the wall elements (16) of the channel structure have roughened or structured surfaces.

8. Optoelectronic device according to one of claims 1 to 7, **characterised in that** the insert (14) consists of a metal diecast part or of a plastics material injection-moulded part.

9. Optoelectronic device according to one of claims 1 to 8, **characterised in that** the insert (14) consists of electrically conductive material.

10. Optoelectronic device according to one of claims 1 to 9, **characterised in that** the transmitter (4) and the receiver (6) are arranged in the insert (14).

11. Optoelectronic device according to claim 10, **characterised in that** the transmitted light beams (3) and received light beams (5) are guided to extend coaxially over the deflecting unit.

12. Optoelectronic device according to claim 11, **characterised in that** the light-sensitive surface (11) of the receiver (6) at least partly encloses the transmitted light beams (3).

13. Optoelectronic device according to one of claims 11 and 12, **characterised in that** the light-sensitive surface (11) of the receiver (6) has a recess and that the transmitter (4) is arranged behind the receiver (6) so that the transmitted light beams (3) are guided through the recess.

14. Optoelectronic device according to claim 13, **characterised in that** the recess is formed as a central bore in the light-sensitive surface (11) of the receiver (6).

15. Optoelectronic device according to claim 14, **characterised in that** the recess opens at an edge of the receiver (6).

16. Optoelectronic device according to one of claims 10 to 15, **characterised in that** the transmitted light beams (3) and received light beams (5) are guided in separate channels (15a, b) of the channel structures of the insert (14).

17. Optoelectronic device according to one of claims 1 to 16, **characterised in that** the deflecting unit is formed by a polygon mirror wheel (8) with a predetermined number of mirror surfaces (9), wherein the received light spot, which is imaged on a mirror surface (9), of the received light beams (5) at least partly encloses the transmitted light spot imaged on the same mirror surface (9).

## Revendications

1. Dispositif optoélectronique pour la saisie de marques munies de motifs contrastés avec un émetteur émettant des rayons lumineux d'émission, un récepteur recevant des rayons lumineux de réception, une unité de déviation au moyen de laquelle les rayons lumineux d'émission sont périodiquement guidés à l'intérieur d'une zone de surveillance et une unité d'évaluation pour évaluer les signaux de réception disponibles à la sortie du récepteur, **caractérisé par le fait que** le récepteur (6) est monté dans un insert (14) opaque qui présente des structures en canal s'étendant dans la direction de l'axe optique du récepteur (6), dans lesquelles les rayons lumineux de réception (5) réfléchis par l'unité de déviation sont guidés vers le récepteur (6).

2. Dispositif optoélectronique selon la revendication 1, **caractérisé par le fait que** le récepteur (6) est disposé dans le fond de l'insert (14) et que les structures en canal présentent des canaux (15a, b) qui sont limités par des éléments de paroi faisant saillie perpendiculairement du fond de l'insert (14).

3. Dispositif optoélectronique selon la revendication 2, **caractérisé par le fait que** les structures en canal forment une structure en nid d'abeilles dont les canaux (15a, b) s'étendent perpendiculairement à l'axe optique du récepteur (6).

4. Dispositif optoélectronique selon l'une des revendications 2 ou 3, **caractérisé par le fait que** la surface de section de l'insert (14) est adaptée à la grandeur de la surface photosensible (11) du récepteur (6).

5. Dispositif optoélectronique selon la revendication 4, **caractérisé par le fait que** le récepteur (6) présente une surface photosensible (11) homogène et continue.

6. Dispositif optoélectronique selon la revendication 4, **caractérisé par le fait que** le récepteur (6) est composé d'un nombre prédéfini d'éléments récepteurs dont les sous-surfaces photosensibles sont les constituants de la surface photosensible (11).

7. Dispositif optoélectronique selon l'une des revendications 2 à 6, **caractérisé par le fait que** les éléments de paroi (16) de la structure en canal présente des surfaces rugueuses ou structurées.

8. Dispositif optoélectronique selon l'une des revendications 1 à 7, **caractérisé par le fait que** l'insert (14) est constitué d'une pièce en métal moulé sous pression ou en matière plastique moulée par injection.

9. Dispositif optoélectronique selon l'une des revendications 1 à 8, **caractérisé par le fait que** l'insert (14) est constitué d'un matériau électroconducteur.

10. Dispositif optoélectronique selon l'une des revendications 1 à 9, **caractérisé par le fait que** l'émetteur (4) et le récepteur (6) sont disposés dans l'insert (14).

11. Dispositif optoélectronique selon la revendication 10, **caractérisé par le fait que** les rayons lumineux d'émission (3) et les rayons lumineux de réception (5) sont guidés selon des trajectoires coaxiales au moyen de l'unité de déviation.

12. Dispositif optoélectronique selon la revendication 11, **caractérisé par le fait que** la surface photosensible (11) du récepteur (6) entoure au moins partiellement les rayons lumineux d'émission (3).

13. Dispositif optoélectronique selon l'une des revendications 11 ou 12, **caractérisé par le fait que** la surface photosensible (11) du récepteur (6) présente un évidement et que l'émetteur (4) est disposé derrière le récepteur (6) de telle manière que les rayons lumineux d'émission (3) sont guidés à travers l'évidement.

14. Dispositif optoélectronique selon la revendication 13, **caractérisé par le fait que** l'évidement est réalisé sous la forme d'un trou central dans la surface photosensible (11) du récepteur (6).

15. Dispositif optoélectronique selon la revendication 14, **caractérisé par le fait que** l'évidement débouche sur un bord du récepteur (6).

16. Dispositif optoélectronique selon l'une des revendications 10 à 15, **caractérisé par le fait que** les rayons lumineux d'émission (3) et les rayons lumineux de réception (5) sont guidés dans des canaux séparés (15a, b) des structures en canal de l'insert (14).

17. Dispositif optoélectronique selon l'une des revendications 1 à 16, **caractérisé par le fait que** l'unité de déviation est formée d'une roue à miroir polygonal (8) présentant un nombre prédéfini de faces réfléchissantes (9), le spot de lumière de réception des rayons lumineux de réception (5) représenté sur une face réfléchissante (9) entourant au moins partiellement le spot de lumière d'émission représenté sur la même face réfléchissante (9).
